# EUROPEAN PATENT APPLICATION

(11) **EP 4 826 933 A1**
(43) Date of publication of application: **21.10.2026**
(21) Application number: 24847173.2
(22) Date of filing: 11.12.2024
(51) Int. Cl.: H02G 3/04, H02G 3/06, F16L 3/26, G02B 6/44, H02G 3/32

(54) **CABLE-CARRYING CHANNEL ASSEMBLY AND CORRESPONDING CABLE-CARRYING COMPONENT**

(30) Priority: 12.12.2023 ES 202332201 U
(71) Applicant: Unex Aparellaje Electrico S.L., 08005 Barcelona (ES)
(72) Inventor: MOSTAZO OVIEDO, José Antonio, 08005 Barcelona (ES)
(74) Representative: Curell Suñol S.L.P.
(86) International application number: PCT/ES2024/070770
(87) International publication number: WO 2025/125701

(57) **Abstract**

Cable channel assembly comprising a cable channel (1) made of a polymer material and a cable-holder component (12) which is coupled directly to the cable channel (1). The cable-holder component (12) comprises a lug (18) integral with a rod (19) in its side walls (15). The lug (18) is inserted into a hollow inner space (8) of an outer guide (7) of the cable channel (1) and the rod (19) goes through a continuous opening (11) of the outer guide (7). A tightening part (20) assembled at one end of the rod (19) can be manually actuated to be moved to a position closer to the side wall (15), which is maintained by the cooperation of the tightening part (20) with the rod (19), and wherein the tightening part (20) is supported by pressure on the outer guide (7), thereby locking the lug (18) in the outer guide (7).

## Description

### Field of the Invention

The invention is comprised in the field of cable channels that are typically used for guiding cables in a space. The invention is applicable particularly, although not exclusively, for guiding bundles of fiber optic cables and other cables in data centers

More specifically, the invention relates to a cable channel assembly, comprising:
- at least one cable channel made of a polymer material, comprising a straight segment with a U-shaped section, with a bottom wall, two opposing side walls, an open upper face and an open end; with there being formed on an outer face of each of said side walls, at least in said straight segment, an outer guide protruding from said outer face of the side wall and extending in the longitudinal direction of said straight segment, said outer guide being in the form of a profile with a hollow inner space, an open wall opposite said outer face of the side wall and an open end, said open wall comprising a continuous opening along said outer guide; and
- a cable-holder component that can be coupled to said cable channel, said cable-holder component comprising at least one channel having a U-shaped section corresponding to that of said straight segment of the cable channel, with a bottom wall, two opposing side walls, an open upper face, and an open end; such that said channel of the cable-holder component and said straight segment of the cable channel are coupled to one another through their respective open ends, forming a continuous channel.

The invention also relates to the cable-holder component that is part of this assembly.

### State of the Art

Cable channels of the type indicated above are provided at least on their side walls with an outer guide that is typically used for fixing various elements to the cable channel. To that end, for example, a system consisting of a nut and a screw, in which the nut is inserted into the outer guide, is used.

Cable channel assemblies of the type indicated above, in which coupling between the channel of the cable-holder component and the straight segment of the cable channel is performed by means of a connector which is a third part interposed between them, are known. The connector is formed by a main body in the form of a channel and composite parts that fit into the outer guide of the straight segment of the cable channel and have a mechanism to lock the coupling. Document WO03084018A1 describes this type of cable channel assembly. This solution has the advantage of allowing coupling and locking to be performed in a simple manner and without the need for tools, but it requires the use of a coupler having a complex composition.

### Description of the Invention

The purpose of the invention is to provide a cable channel assembly of the type indicated above, which has a simpler structure with a lower manufacturing cost and a lower material consumption, without reducing the ease of coupling and locking, and without reducing the effectiveness of said locking.

This purpose is achieved by means of a cable channel assembly of the type indicated above, characterized in that the channel of the cable-holder component and the straight segment of the cable channel are coupled to one another through their respective open ends directly without the interposition of a third element; and in that said cable-holder component comprises in said channel, on the outer face of each of its side walls, a lug extending in cantilever fashion towards its open end, arranged facing said side wall and at a distance therefrom, and said lug is integral with a rod extending from said lug in a manner perpendicular thereto and in the direction opposite said side wall; said lug and said rod being sized such that, when said channel of the cable-holder component and said straight segment of the cable channel are coupled to one another, said lug is inserted into the hollow inner space of the outer guide through the open end of said outer guide, and said rod goes through the continuous opening of the outer guide. The cable-holder component is associated with a tightening part which is assembled at one end of the rod protruding from the open wall of the outer guide, said tightening part cooperating with said rod such that it can be manually actuated to be moved to a position closer to the side wall, which is maintained by the cooperation of said tightening part with said rod, said tightening part being supported with pressure on the open wall of the outer guide, thereby locking the lug in said outer guide. Preferably, the cable-holder component is made of a polymer material. Preferably, the tightening part is also made of a polymer material.

The cable-holder component can be, for example, an elbow, a T-shaped branch, a cable guide for changing height, a widening or narrowing segment, a receiver for the entry of cables into a device, etc. Generally, the cable-holder component can be any component of a cable channel system having a channel with a U-shaped section corresponding to that of the straight segment of a cable channel for coupling with same at its end so as to form a continuous channel. The tightening part can be previously assembled on the rod or can be a part that is supplied separately. Preferably, the tightening part is previously assembled on the rod.

As a result of the coupling being performed without the interposition of a third part, the assembly is simpler and easier to manage both for the end user and for the manufacture and distributors. The incorporation of the lug and the rod on the outer face of the side walls of the channel of the cable-holder component requires modifying the latter, but this modification is performed only at one end and in the outer part, such that it does not alter the functionality of cable-holder system, and is furthermore easy to perform and inexpensive. As will be seen below in the detailed description of several embodiments, this solution allows the coupling to be performed easily, with a single maneuver and by only handling the cable-holder component and the cable channel. Furthermore, it allows the coupling to be locked easily by manually actuating the tightening part after having performed the coupling, and obtaining a robust locking. Advantageously, providing an assembly of an outer guide and a lug and rod on each of the side walls is sufficient to obtain this robust locking, and there is no need to provide any locking system on the bottom wall.

The rod and the tightening part can have various configurations. For example, solutions in which the rod and the tightening part form a bayonet-type assembly, such that the user has to rotate the tightening part, for example, one quarter of a turn in order to bring it to the correct tightening position, are possible. Other solutions in which the tightening part is a composite part are also possible. For example, it can be envisaged that the tightening part comprises a cam and lever mechanism, such that the user has to actuate the lever to obtain the correct tightening position. In some embodiments, the rod is a threaded rod and the tightening part is a nut that is screwed onto said rod and comprises a grip, so that the user can grab the tightening part with his/her hand and rotate it, and a support base to be supported on the open wall of the outer guide. This solution is simple and allows robust locking to be performed. In an advantageous solution, the nut has a through hole having at least one threaded band provided with an inner thread, and at least one non-threaded band, extending along the entire length of said through hole in the axial direction thereof; and the rod has at least one threaded band provided with an outer thread constituting the threading, and at least one non-threaded band.

The threaded and non-threaded bands of the through hole of the nut and of the threaded rod are complementary to one another such that, in a first angular position of said nut with respect to said threaded rod, said threaded band of the threaded rod and said threaded band of the through hole of the nut are completely facing said non-threaded band of the through hole of the nut and said non-threaded band of the threaded rod, respectively, and coupling of the outer thread of the threaded rod with the inner thread of the through hole of the nut does not take place and said nut can be freely moved in the axial direction of said threaded rod; and in a second angular position of said nut with respect to said threaded rod, said threaded band of the threaded rod is at least partially facing said threaded band of the through hole of the nut and coupling of the outer thread of the threaded rod with the inner thread of the through hole of the nut takes place to prevent the free movement of said nut in the axial direction of said threaded rod. This configuration with a threaded rod and a through hole is as described in document ES1299216U, with the difference that, in this case, the through hole with threaded bands and non-threaded bands is located in a nut constituting the tightening part. To lock the coupling, the user places the nut in the first angular position, manually moves said nut freely in the axial direction until its support base is supported on the open wall of the outer guide, pushes said nut a little more so that it exerts the desired pressure on said open wall, and then rotates said nut slightly, in any case less than one turn, in order to transition to the second angular position and thereby couple the inner thread thereof with the thread of the threaded rod. This coupling of the two threads fixes the position of the nut with respect to the threaded rod in the axial direction. This method allows the coupling to be locked very quickly and with few movements of only one hand.

Various solutions to obtain a robust coupling between the channel of the cable-holder component and the straight segment of the cable channel are possible. In particular, it can be envisaged that the channel of the cable-holder component has its own added elements that fit with the straight segment of the cable channel. In the preferred embodiments, the channel of the cable-holder component comprises an outer edge, formed on an outer face of at least one of the side walls and the bottom wall of said channel, and a continuous perimeter lip which is formed by the bottom wall and the side walls of said channel and extends between the open end of said channel and said outer edge, said outer edge and said perimeter lip being sized such that, when said channel is coupled to the straight segment of the cable channel, said open end of the straight segment of the cable channel is supported such that it abuts with said outer edge and said perimeter lip is inserted into said straight segment of the cable channel and tightly supported on the bottom wall and the side walls of said straight segment. This solution provides a coupling that is resistant to bending stresses on the side walls and the bottom wall. Furthermore, since the perimeter lip extends outwardly in the length direction of the channel, it only interferes with the inside of the straight segment of the cable channel, but not with the inside of the cable-holder component.

Preferably, the outer edge is formed continuously on an outer face of the two side walls and of the bottom wall of the channel. A more robust coupling is thus obtained.

Preferably, the thickness of the perimeter lip gradually decreases towards the open end of the channel, thereby providing a smooth transition on the inner face of the side walls and the bottom wall so as not to damage the cables.

Preferably, the lug is connected in a widening of the outer edge. This widening is a simple, discontinuity-free geometric solution for the placement of the lug, and provides a good support for the end of the outer guide, which increases the robustness of the coupling.

In some preferred embodiments, the free upper end of each side wall of the straight segment of the cable channel forms a tubular edge projecting outwardly from this side wall; and the free upper end of each side wall of the channel forms a support surface projecting outwardly from this side wall, such that the end of said tubular edge is supported on said support surface when said channel is coupled to said straight segment of the cable channel. This solution also increases the robustness of the coupling through the support of the tubular edge on the support surface. The tubular edge which is usually arranged at the upper end of the cable channels and serves other functions is advantageously used, particularly for fixing covers or other elements to the cable channel.

Preferably, the support surface for the tubular edge is a prolongation of the widening of the edge in which the lug is connected. This prolongation is a simple, discontinuity-free geometric solution.

Preferably, the support surface comprises a recess extending from the perimeter of said support surface such that, when the channel is coupled to the straight segment of the cable channel, said recess forms between said support surface and the end of the tubular edge a gap to receive the head of a flat screwdriver, for the purpose of making uncoupling easier, particularly in the embodiments provided with the perimeter lip, in which the coupling is strong due to the friction force between the perimeter lip and the walls of the straight segment of the channel.

In some preferred embodiments, the free upper end of each side wall of the channel forms an edge projecting outwardly from this side wall and having the same outer shape as the tubular edge, prolonging said tubular edge when said channel is coupled to the straight segment of the cable channel. This prolongation of the tubular edge provides a continuity of the free upper ends of the side walls which facilitates the integration of the assembly with other elements, particularly for fixing covers or other elements to the assembly. Preferably, the edge has a recessed segment in the channel and the cable-holder component comprises a bridge having at its ends claws with a shape complementary to the shape of said recessed segment of the edge, such that said claws removably snap-fit with said recessed segment of the edge, and said bridge closes a segment of the open upper face of the channel. This solution allows optionally placing the bridge to confine the cables laid in the channel, without altering the geometry of the cable-holder component. It also allows placing a cover over the bridge.

Preferably, the bridge is formed such that, when it is snap-fitted to the recessed segment of the edge through the claws, closing a segment of the open upper face of the channel, said bridge does not protrude from said open upper face of the channel. This solution has the advantage of the bridge not altering the height of the channel of the cable-holder accessory.

The invention also comprises the cable-holder component which is part of the assembly described above, considered individually. Therefore, the invention comprises a cable-holder component that can be coupled to a cable channel, said cable-holder component comprising at least one channel having a U-shaped section, with a bottom wall, two opposing side walls, an open upper face, and an open end; characterized in that it comprises in said channel, on the outer face of each of its side walls, a lug extending in cantilever fashion towards the open end of said channel, arranged facing said side wall and at a distance therefrom, and said lug is integral with a rod extending from said lug in a manner perpendicular thereto and in the direction opposite said side wall; said cable-holder component being associated with a tightening part which is assembled at one end of said rod, said tightening part cooperating with said rod such that it can be manually actuated to be moved to a position closer to said side wall, which is maintained by the cooperation of said tightening part with said rod. Preferably, the cable-holder component is made of a polymer material.

Preferably, the rod is a threaded rod and the tightening part is a nut that is screwed onto said rod and comprises a grip and a support base.

Preferably, the channel of the cable-holder component comprises an outer edge, formed on an outer face of at least the side walls of said channel, and a continuous perimeter lip which is formed by the bottom wall and the side walls of said channel and extends between the open end of said channel and said outer edge.

Preferably, the outer edge is formed continuously on an outer face of the two side walls and of the bottom wall of the channel.

Preferably, the thickness of the perimeter lip gradually decreases towards the open end of the channel.

Preferably, the lug is connected in a widening of the outer edge.

Preferably, the free upper end of each side wall of the channel forms a support surface projecting outwardly from this side wall.

Preferably, the support surface is a prolongation of the widening.

Preferably, the support surface comprises a recess extending from the perimeter of the support surface and is suitable to receive the head of a flat screwdriver.

Preferably, the free upper end of each side wall of the channel forms an edge projecting outwardly from this side wall and having in the channel a recessed segment; and the cable-holder component comprises a bridge having at its ends claws with a shape complementary to the shape of said recessed segment of the edge, such that said claws removably snap-fit with said recessed segment of the edge, and said bridge closes a segment of the open upper face of said channel.

Preferably, the bridge is formed such that, when it is snap-fitted to said recessed segment of the edge through said claws, closing a segment of the open upper face of the channel, said bridge does not protrude from the open upper face of said channel.

The invention also comprises other detailed features shown in the following detailed description of an embodiment of the invention and in the attached figures.

### Brief Description of the Drawings

The advantages and features of the invention are apparent from the following description in which preferred embodiments of the invention are described in a non-limiting manner with respect to the scope of the main claim in reference to the figures.
Figure 1 is a perspective view of a cable-holder assembly formed by two cable channels and a cable-holder component, in an uncoupled position.
Figures 2 and 3 are, respectively, a front view and a perspective view of the cable channel.
Figures 4, 5, 6 and 7 are, respectively, a front perspective view, a top view, a rear perspective view, and a bottom perspective view of the cable-holder component.
Figure 8 is an enlarged partial top view of the channel at one of the ends of the cable-holder component, with the tightening parts assembled on the rods.
Figure 9 is a view similar to Figure 8, without the tightening parts.
Figure 10 is an enlarged partial perspective view of one side of the open end of the channel, with the tightening parts assembled on the rods.
Figure 11 is a view similar to Figure 10, without the tightening parts.
Figure 12 is a front perspective view of the cable-holder component coupled to one of the cable channels.
Figure 13 is a front perspective view of the cable-holder component coupled to two cable channels.
Figure 14 is a rear perspective view of the cable-holder component coupled to two cable channels.
Figure 15 is an enlarged partial perspective view of the cable-holder component coupled to two cable channels, showing the area of the coupling areas on one of the sides, with the tightening parts assembled on the rods.
Figure 16 is a view similar to Figure 15, without the tightening parts.
Figures 17 and 18 are, respectively, a front perspective view and a rear perspective view of the tightening part.
Figure 19 is a partial front perspective view, showing the cable-holder component and the two cable channels coupled thereto, with the bridges before being placed and snap-fitted.
Figure 20 is a view similar to Figure 19, with the bridges snap-fitted.

### Detailed Description of Embodiments of the Invention

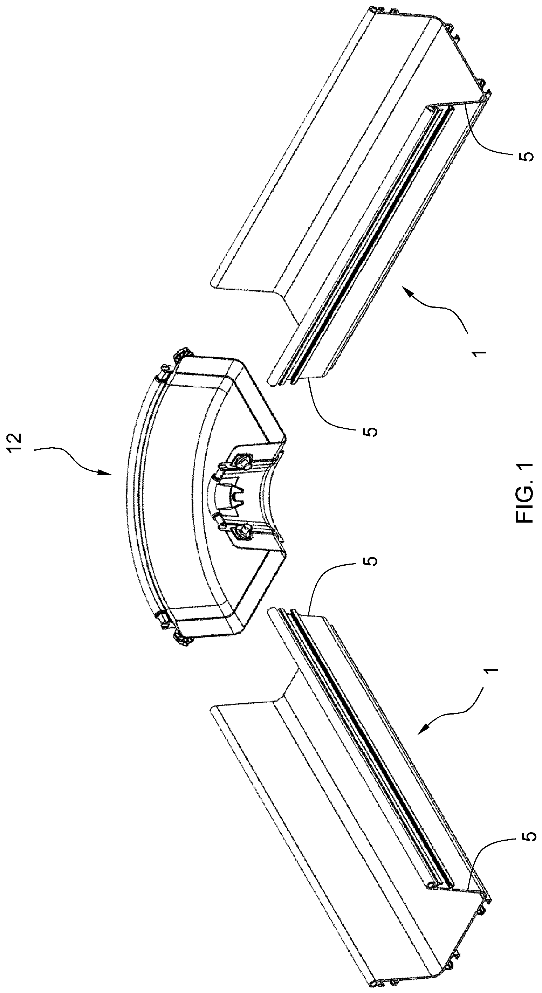

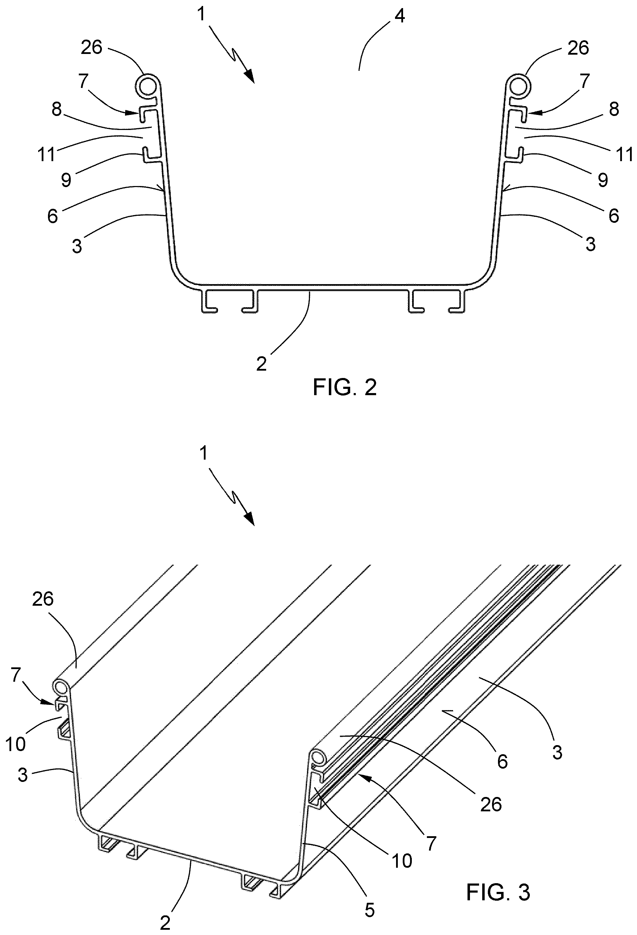

The cable channel assembly which is described below by way of example is applied mainly for guiding bundles of fiber optic cables in data centers. It is formed by two cable channels 1 and a cable-holder component 12. The cable channels 1 are made of a polymer material such as, for example, PVC (polyvinyl chloride) or ABS (acrylonitrile butadiene styrene). In the example depicted in the figures, the two cable channels 1 have identical section and can have different lengths. As can be seen in Figures 1 to 3, each cable channel 1 is a straight profile segment having a U-shaped section, with a bottom wall 2, two opposing side walls 3, an open upper face 4 and two open ends 5. The free upper end of each side wall 3 forms an outwardly projecting tubular edge 26. There is formed on an outer face 6 of each of the side walls 3, along the entire cable channel 1, an outer guide 7 protruding from the outer face 6 of the side wall 3 and extending in the longitudinal direction of the cable channel 1. This outer guide 7 is in the form of a profile with a hollow inner space 8 and an open wall 9 opposite the outer face 6 comprising a continuous opening 11 along the length of the outer guide 7. The two ends of the outer guide 7 in the longitudinal direction are open ends 10.

Other embodiments of the invention in which the cable channels are not a straight U-shaped profile segment are possible. For example, at least one of the cable channels can be an elbow or a T-shaped branch, with a final segment with a U-shaped section described above.

Moreover, the number of cable channels in the assembly can be other than two, depending on the nature of the cable-holder component.

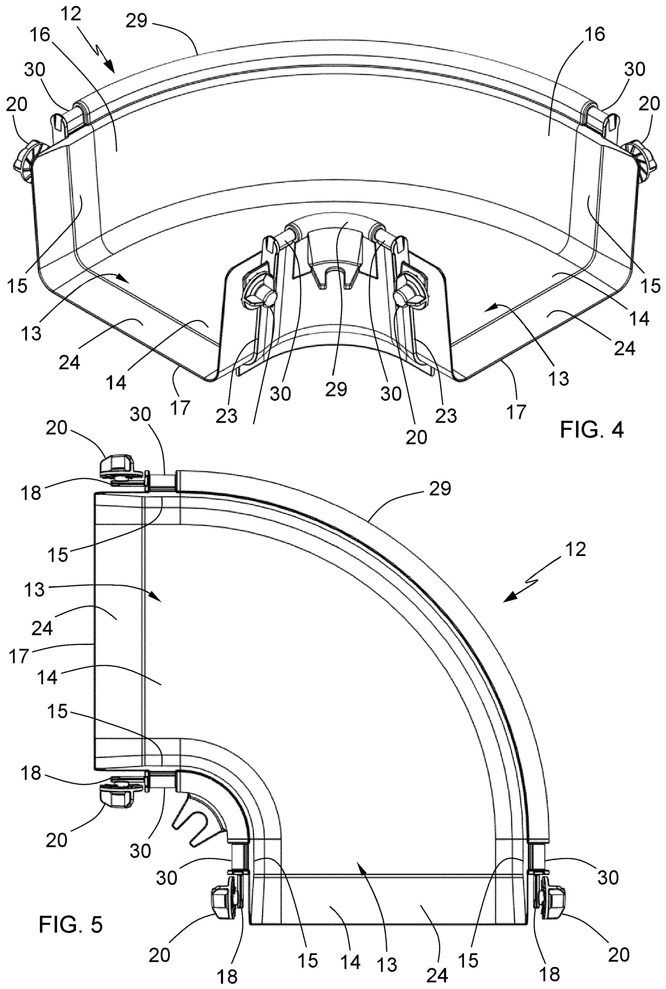

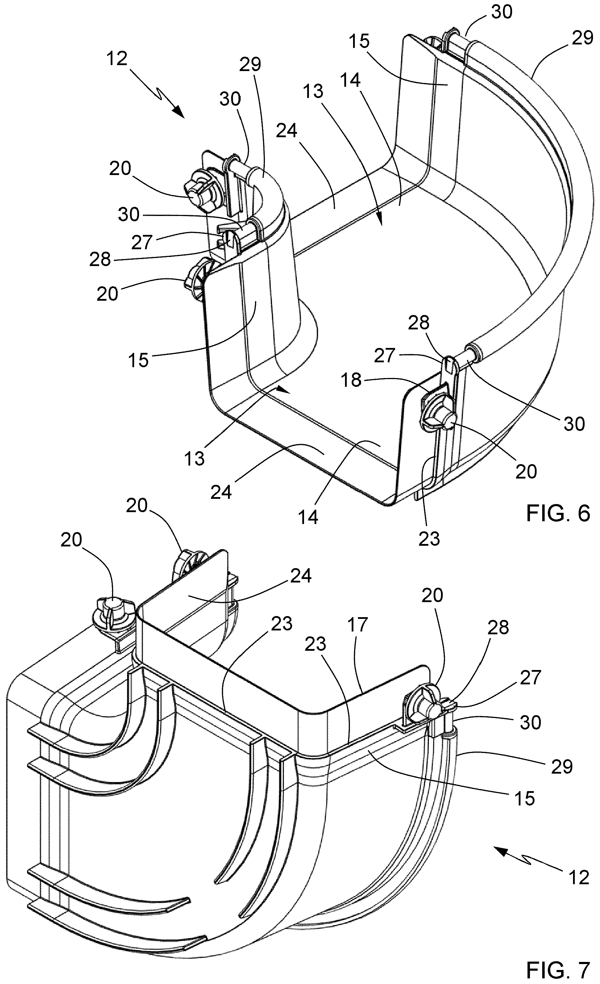

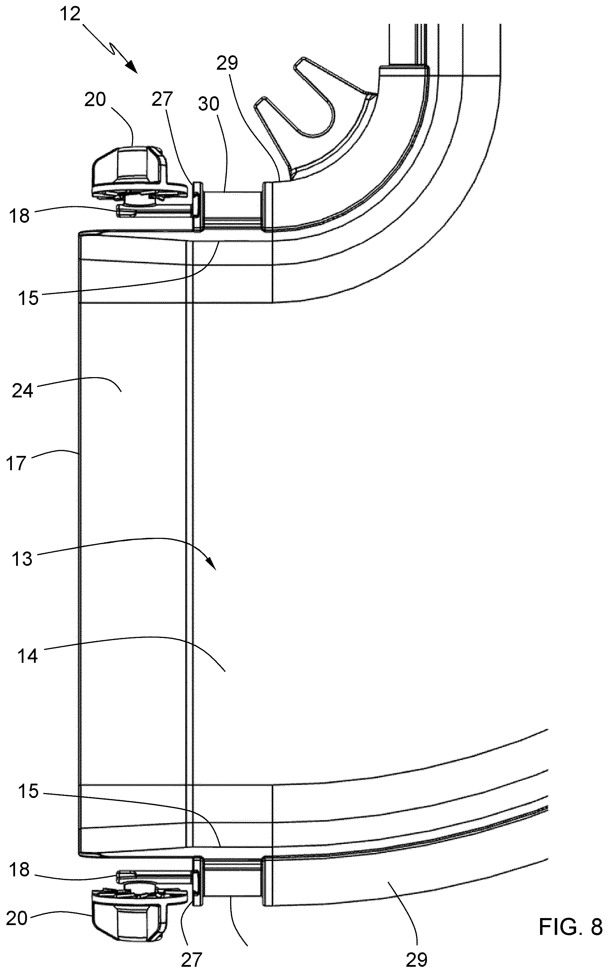

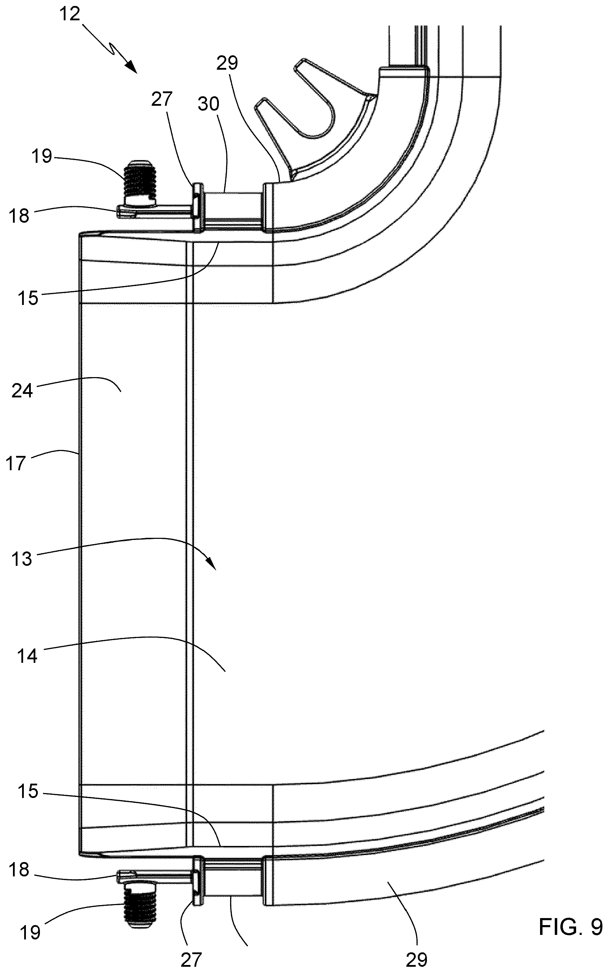

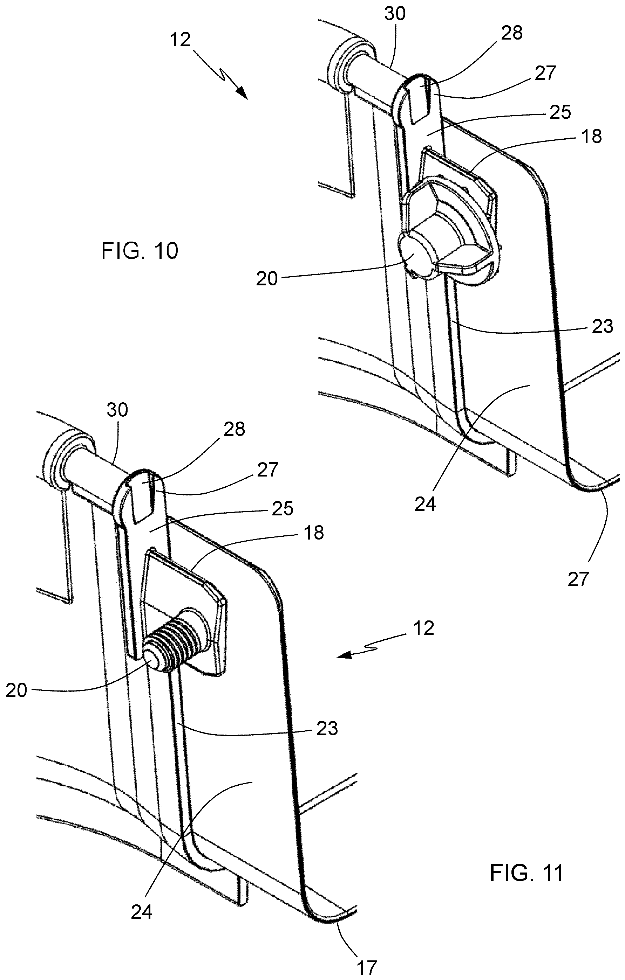

The cable-holder accessory 12 described in this example is a 90° elbow for joining the two cable channels 1. This cable-holder accessory 12 in the form of an elbow is intercalated between two cable channels 1 in order to couple them through their open ends 5. As can be seen in Figures 4 to 11, each of the two ends of the cable-holder component 12 forms a channel 13 having a U-shaped section corresponding to the U-shaped section of the cable channel 1, with a bottom wall 14, two opposing side walls 15, an open upper face 16, and an open end 17. There is formed on the outer face of each of the two side walls 15 of each channel 13 a lug 18 extending in cantilever fashion towards the open end 17, arranged facing the side wall 15 and at a distance therefrom. A threaded rod 19, formed from a single part with the lug 18, extends from said lug 18 in a manner perpendicular thereto and in a direction opposite the side wall 15. The rod 19 has a diameter that is smaller than the width of the continuous opening 11 of the outer guide 7, such that it can go through same. There is also formed on the outer face of each of the two side walls 15 and of the bottom wall 14 of each channel 13 a continuous outer edge 23 comprising, in the side wall 15, a widening 25 in which the lug 18 is connected. Each channel 13 comprises a continuous perimeter lip 24 which is formed by the bottom wall 14 and the side walls 15 of the channel 13 and extends between the open end 17 and the outer edge 23. The thickness of the perimeter lip 24 gradually decreases towards the open end 17. In each channel 13, the free upper end of each side wall 15 forms a support surface 27 for the end of the tubular edge 26 of the cable channel 1. The support surface 27 is a prolongation of the widening 25 projecting outwardly from the side wall 15 and comprising a recess 28 extending from the perimeter of said support surface 27. The recess 28 is formed such that it is suitable to receive the head of a flat screwdriver. In each channel, each side wall 15 forms an edge 29 projecting outwardly from this side wall 15 and having the same outer shape as the tubular edge 26 of the cable channel. In each channel 13, the edge 29 has a recessed segment 30.

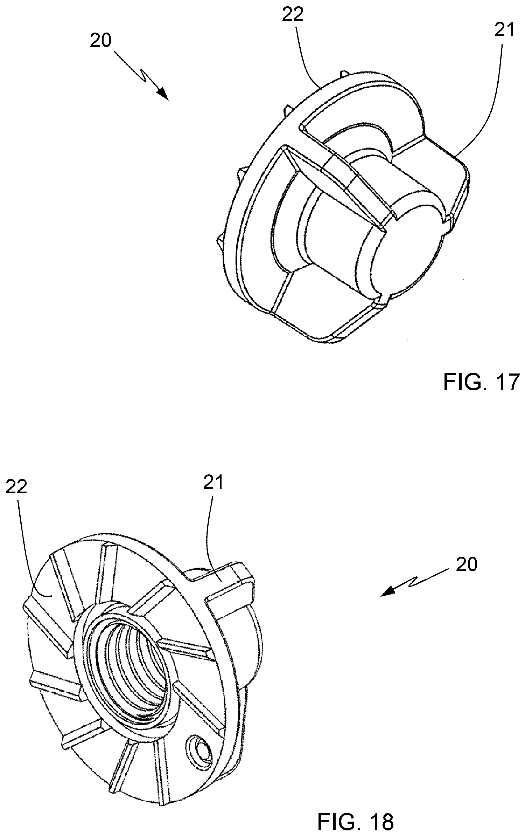

As can also be seen in Figures 4 to 11, the cable-holder component 12 is associated with a tightening part 20 which is assembled at one end of the rod 19 and cooperates with said rod 19 such that it can be manually actuated to be moved to a position closer to the side wall 15, which is maintained by the cooperation of said tightening part 20 with said rod 19. More specifically, as shown in greater detail in Figures 17 and 18, in the depicted example the tightening part 20 is a nut that is screwed onto the threaded rod 19 and comprises a grip 21 and a support base 22. The grip 21, which is a cylindrical body with three radial flanges in this example, allows the user to grab the tightening part 20 with two fingers to rotate it and screw or unscrew it with respect to the rod 19. The support base 22 is a circular radial projection with a diameter that is greater than the width of the continuous opening 11 of the outer guide 7.

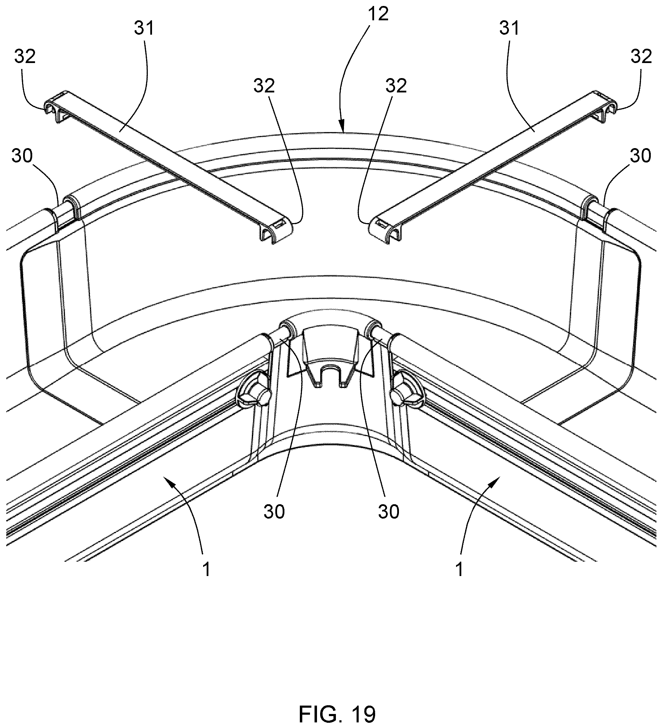

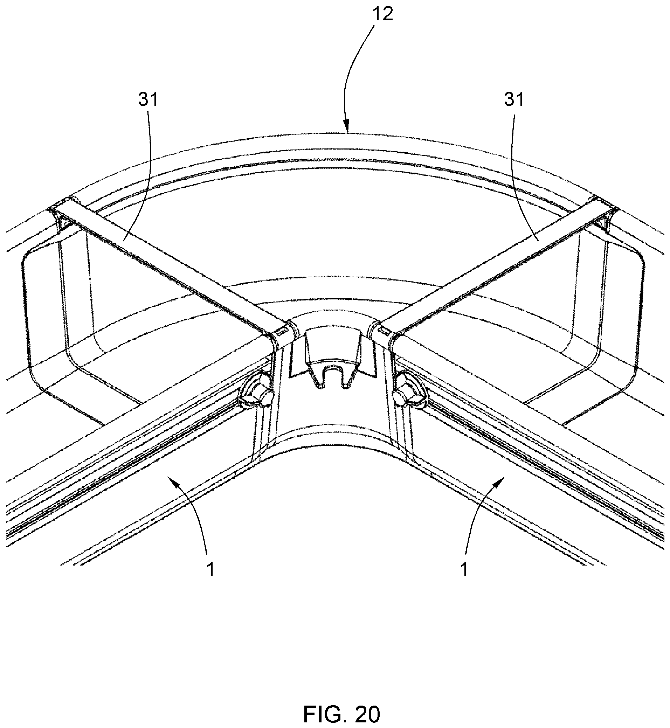

As shown in Figures 19 and 20, the cable-holder component 12 further comprises a bridge 31 for each channel 13. The bridge 31 has at its ends claws 32 with a shape complementary to the shape of the recessed segment 30 of the edge 29. The claws 32 removably snap-fit with the recessed segments 30. When it is snap-fitted to the recessed segments 30 through the claws 32, the bridge 31 closes a segment of the open upper face 16 of the channel 13, without protruding from said open upper face 16. More specifically, the bridge 31 has a flat upper surface that is level with the edge 29 and the tubular edge 26.

The cable-holder component 12 is a one-piece component made of a polymer material such as, for example, PVC or ABS. The tightening part 20 is also made of a polymer material such as, for example, PVC or ABS.

Other embodiments of the cable-holder accessory such as, for example, a T-shaped branch, a cable guide to cause a change in height, a widening or narrowing segment, a receiver for the entry of cables into a device, etc., are possible.

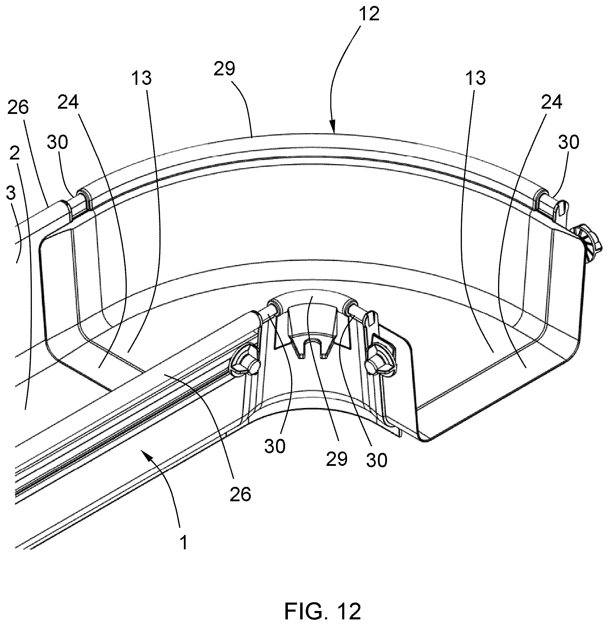

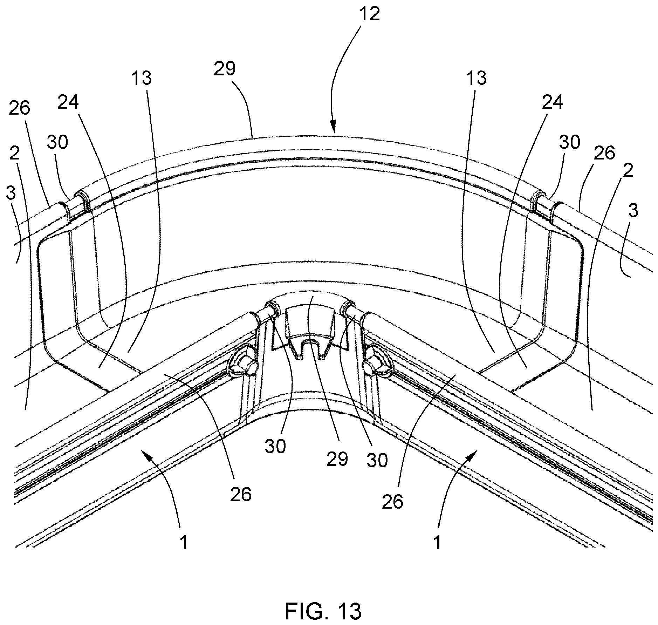

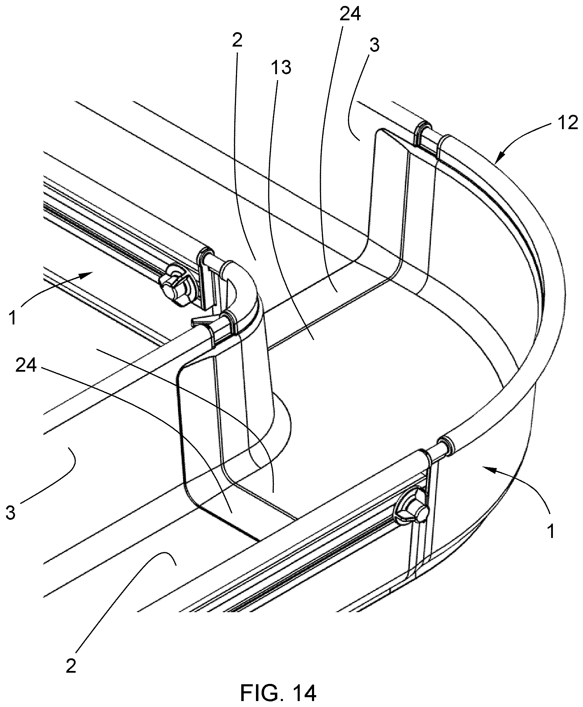

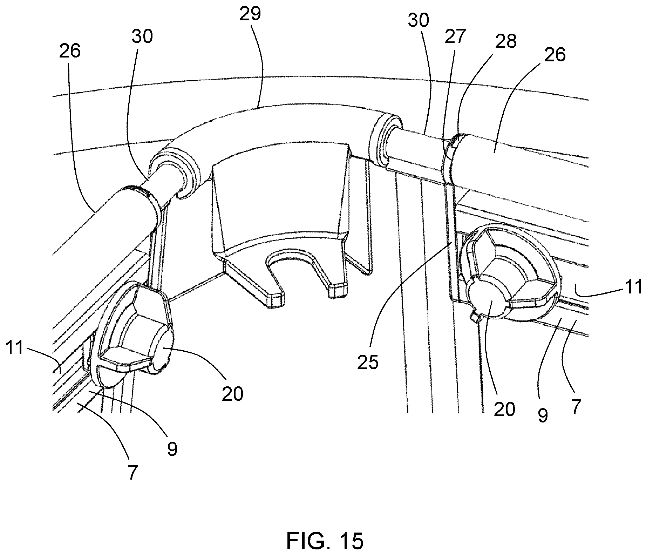

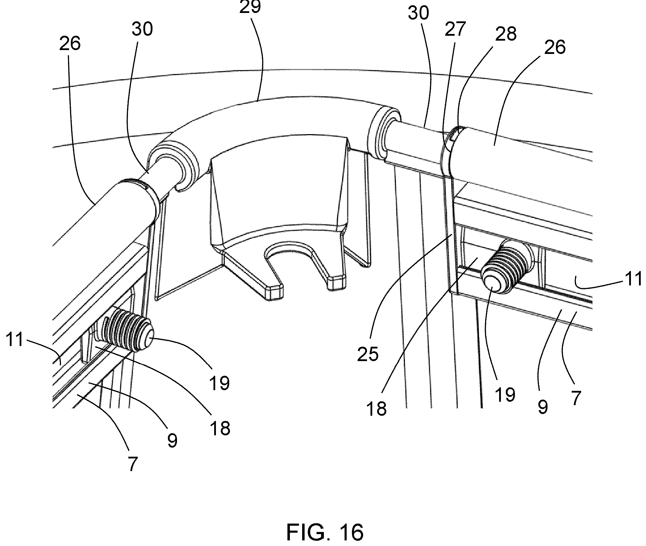

As can be seen in Figures 12 to 16, when each channel 13 of the cable-holder component 12 and each cable channel 1 are coupled to one another, the open end 17 of the channel 13 is coupled to the open end 5 of the cable channel 1 directly without the interposition of a third element, such that the channel 13 and the cable channel 1 forms a continuous channel. The open end 5 of the cable channel 1 is supported such that it abuts with the outer edge 23 and the perimeter lip 24 is inserted into the cable channel 1 and tightly supported on the bottom wall 2 and the side walls 3. The lug 18 is inserted into the hollow inner space 8 of the outer guide 7 through its open end 10, and the rod 19 goes through the continuous opening 11 such that the end of said rod 19 projects from the open wall 9. The end of the tubular edge 26 is supported on the support surface 27, and the recess 28 forms, between said support surface 27 and the end of said tubular edge 26, a gap to receive the head of a flat screwdriver. The edge 29 prolongs the tubular edge 26.

The coupling of each cable channel 1 to the cable-holder accessory 12 is preferably performed with the tightening part 20 previously assembled on the rod 19, being unscrewed sufficiently so that the open wall 9 of the outer guide 7 passes between the lug 18 and the support base 22 of said tightening part 20. The coupling can be performed by means of a translation of the cable channel 1, previously aligned with the channel 13, in the longitudinal direction. Advantageously, the invention allows using a more user-friendly alternative coupling method which consists of first inserting the end of the perimeter lip 24 into the cable channel 1, keeping the cable channel 1 slightly inclined with respect to the channel 13, and then rotating the cable-holder component 12 to reach the final coupling position. During this rotation, the perimeter lip 24 remains fitted advantageously between the bottom wall 2 and the side walls 3 of the cable channel 1, whereby the lug 18 is aligned with the open end 10 of the outer guide 7, and the lug 18 and the rod 19 are gradually inserted into the inner space 8 and through the opening 11, respectively.

To lock the coupling, the user manually actuates the tightening part 20 to rotate it, screwing it onto the rod 19, whereby the tightening part 20 is moved towards the side wall 15 and is supported by pressure, through its support base 22, on the open wall 9 of the outer guide 7, thereby locking the lug 18 in said outer guide 7. To unlock the coupling, the user rotates the tightening part 20 in the opposite direction to unscrew it. To perform uncoupling, the user can advantageously perform the rotational movement described above in the opposite direction. To start the uncoupling, the tip of a flat screwdriver can be inserted into the gap formed by the recess 28 and a levering movement can be performed with the screwdriver.

In an alternative embodiment not shown in the figures, the rod 19 has two threaded bands, one opposite the other, and two non-threaded bands, one opposite the other. The two threaded bands are provided with an outer thread, constituting the threading of the rod 19. The two non-threaded bands are flat faces in planes parallel to one another and parallel to the axis of the rod. The tightening part 20 is a nut with a through hole having two threaded bands, one opposite the other, and two non-threaded bands, one opposite the other. Each of these threaded bands of the through hole of the nut is provided with the inner thread. The non-threaded bands of the through hole of the nut extend along the entire length of the through hole in its axial direction. The threaded and non-threaded bands of the through hole and of the rod are complementary to one another in two angular positions of the nut with respect to the rod. In a first angular position of the nut, the threaded bands of the rod and the threaded bands of the through hole of the nut are all facing the non-threaded bands of the through hole of the nut and the non-threaded bands of the rod, respectively. In this first angular position, coupling of the outer thread of the rod with the inner thread of the through hole of the nut does not take place, whereby the nut can be moved freely towards the open wall 9 of the outer guide 7 in the axial direction. In a second angular position of the nut with respect to the rod, the threaded bands of the rod are at least partially facing the threaded bands of the through hole of the nut. In this second angular position, coupling of the outer thread of the rod with the inner thread of the through hole of the nut takes place. This coupling between the two threads prevents the free movement of the rod in the axial direction. This configuration with a threaded rod and a through hole is as described in document ES1299216U, with the difference that, in this case, the through hole with threaded bands and non-threaded bands is located in a nut constituting the tightening part.

## Claims

1. A cable channel assembly, comprising:
- at least one cable channel (1) made of a polymer material, comprising a straight segment with a U-shaped section, with a bottom wall (2), two opposing side walls (3), an open upper face (4) and an open end (5); with there being formed on an outer face (6) of each of said side walls (3), at least in said straight segment, an outer guide (7) protruding from said outer face (6) of the side wall (3) and extending in the longitudinal direction of said straight segment, said outer guide (7) being in the form of a profile with a hollow inner space (8), an open wall (9) opposite said outer face (6) of the side wall (3) and an open end (10), said open wall (9) comprising a continuous opening (11) along said outer guide (7); and
- a cable-holder component (12) that can be coupled to said cable channel (1), said cable-holder component (12) comprising at least one channel (13) having a U-shaped section corresponding to that of said straight segment of the cable channel (1), with a bottom wall (14), two opposing side walls (15), an open upper face (16), and an open end (17); such that said channel (13) of the cable-holder component (12) and said straight segment of the cable channel (1) are coupled to one another through their respective open ends (17, 5), forming a continuous channel;
**characterized in that** said channel (13) of the cable-holder component (12) and said straight segment of the cable channel (1) are coupled to one another through their respective open ends (17, 5) directly, without the interposition of a third element; and **in that** said cable-holder component (12) comprises in said channel (13), on the outer face of each of its side walls (15), a lug (18) extending in cantilever fashion towards its open end (17), arranged facing said side wall (15) and at a distance therefrom, and said lug (18) is integral with a rod (19) extending from said lug (18) in a manner perpendicular thereto and in the direction opposite said side wall (15); said lug (18) and said rod (19) being sized such that, when said channel (13) of the cable-holder component (12) and said straight segment of the cable channel (1) are coupled to one another, said lug (18) is inserted into said hollow inner space (8) of the outer guide (7) through the open end (10) of said outer guide (7), and said rod (19) goes through said continuous opening (11); said cable-holder component (12) being associated with a tightening part (20) which is assembled at one end of said rod (19) protruding from said open wall (9), said tightening part (20) cooperating with said rod (19) such that it can be manually actuated to be moved to a position closer to said side wall (15), which is maintained by the cooperation of said tightening part (20) with said rod (19), said tightening part (20) being supported with pressure on said open wall (9), thereby locking said lug (18) in said outer guide (7).

2. The cable channel assembly according to claim 1, **characterized in that** said rod (19) is a threaded rod and said tightening part (20) is a nut that is screwed onto said rod (19) and comprises a grip (21) and a support base (22) to be supported on said open wall (9) of the outer guide (7).

3. The cable channel assembly according to any one of claims 1 or 2, **characterized in that** said channel (13) of the cable-holder component (12) comprises an outer edge (23), formed on an outer face of at least one of the side walls (15) and the bottom wall (14) of said channel (13), and a continuous perimeter lip (24) which is formed by said bottom wall (14) and said side walls (15) of the channel (13) and extends between said open end (17) of the channel (13) and said outer edge (23), said outer edge (23) and said perimeter lip (24) being sized such that, when said channel (13) is coupled to said straight segment of the cable channel (1), said open end (5) of the straight segment of the cable channel (1) is supported such that it abuts with said outer edge (23) and said perimeter lip (24) is inserted into said straight segment of the cable channel (1) and tightly supported on the bottom wall (2) and the side walls (3) of said straight segment.

4. The cable channel assembly according to claim 3, **characterized in that** said outer edge (23) is formed continuously on an outer face of the two side walls (15) and of the bottom wall (14) of said channel (13).

5. The cable channel assembly according to any one of claims 3 or 4, **characterized in that** the thickness of said perimeter lip (24) gradually decreases towards said open end (17) of the channel (13).

6. The cable channel assembly according to any one of claims 3 to 5, **characterized in that** said lug (18) is connected in a widening (25) of said outer edge (23).

7. The cable channel assembly according to any one of claims 1 to 6, **characterized in that** the free upper end of each side wall (3) of said straight segment of the cable channel (1) forms a tubular edge (26) projecting outwardly from this side wall (3); and the free upper end of each side wall (15) of said channel (13) forms a support surface (27) projecting outwardly from this side wall (15), such that the end of said tubular edge (26) is supported on said support surface (27) when said channel (13) is coupled to said straight segment of the cable channel (1).

8. The cable channel assembly according to claims 6 and 7, **characterized in that** said support surface (27) is a prolongation of said widening (25).

9. The cable channel assembly according to any one of claims 7 or 8, **characterized in that** said support surface (27) comprises a recess (28) extending from the perimeter of said support surface (27) such that, when said channel (13) is coupled to said straight segment of the cable channel (1), said recess (28) forms between said support surface (27) and the end of said tubular edge (26) a gap to receive the head of a flat screwdriver.

10. The cable channel assembly according to any one of claims 7 to 9, **characterized in that** the free upper end of each side wall (15) of said channel (13) forms an edge (29) projecting outwardly from this side wall (15) and having the same outer shape as said tubular edge (26), prolonging said tubular edge (26) when said channel (13) is coupled to said straight segment of the cable channel (1), and said edge (29) has in said channel (13) a recessed segment (30); and **in that** said cable-holder component (12) comprises a bridge (31) having at its ends claws (32) with a shape complementary to the shape of said recessed segment (30) of the edge (29), such that said claws (32) removably snap-fit with said recessed segment (30) of the edge (29), and said bridge (31) closes a segment of the open upper face (16) of the channel (13).

11. The cable channel assembly according to claim 10, **characterized in that** said bridge (31) is formed such that, when it is snap-fitted to said recessed segment (30) of the edge (29) through said claws (32), closing a segment of the open upper face (16) of the channel (13), said bridge (31) does not protrude from said open upper face (16) of the channel (13).

12. A cable-holder component (12) that can be coupled to a cable channel (1), said cable-holder component (12) comprising at least one channel (13) having a U-shaped section, with a bottom wall (14), two opposing side walls (15), an open upper face (16) and an open end (17);
**characterized in that** it comprises in said channel (13), on the outer face of each of its side walls (15), a lug (18) extending in cantilever fashion towards the open end (17) of said channel (13), arranged facing said side wall (15) and at a distance therefrom, and said lug (18) is integral with a rod (19) extending from said lug (18) in a manner perpendicular thereto and in the direction opposite said side wall (15); said cable-holder component (12) being associated with a tightening part (20) which is assembled at one end of said rod (19), said tightening part (20) cooperating with said rod (19) such that it can be manually actuated to be moved to a position closer to said side wall (15), which is maintained by the cooperation of said tightening part (20) with said rod (19).

13. The cable-holder component (12) according to claim 12, **characterized in that** said rod (19) is a threaded rod and said tightening part (20) is a nut that is screwed onto said rod (19) and comprises a grip (21) and a support base (22).

14. The cable-holder component (12) according to any one of claims 12 or 13, **characterized in that** said channel (13) of the cable-holder component (12) comprises an outer edge (23), formed on an outer face of at least the side walls (15) of said channel (13), and a continuous perimeter lip (24) which is formed by said bottom wall (14) and said side walls (15) of the channel (13) and extends between said open end (17) of the channel (13) and said outer edge (23).

15. The cable-holder component (12) according to claim 14, **characterized in that** said outer edge (23) is formed continuously on an outer face of the two side walls (15) and of the bottom wall (14) of said channel (13).

16. The cable-holder component (12) according to any one of claims 14 or 15, **characterized in that** the thickness of said perimeter lip (24) gradually decreases towards said open end (17) of the channel (13).

17. The cable-holder component (12) according to any one of claims 13 to 16, **characterized in that** said lug (18) is connected in a widening (25) of said outer edge (23).

18. The cable-holder component (12) according to any one of claims 12 to 17, **characterized in that** the free upper end of each side wall (15) of the channel (13) forms a support surface (27) projecting outwardly from this side wall (15).

19. The cable-holder component (12) according to claims 17 and 18, **characterized in that** said support surface (27) is a prolongation of said widening (25).

20. The cable-holder component (12) according to any one of claims 18 or 19, **characterized in that** said support surface (27) comprises a recess (28) extending from the perimeter of said support surface (27) and is suitable to receive the head of a flat screwdriver.

21. The cable-holder component (12) according to any one of claims 12 to 20, **characterized in that** the free upper end of each side wall (15) of said channel forms an edge (29) projecting outwardly from this side wall (15), and said edge (29) has in said channel (13) a recessed segment (30); and **in that** said cable-holder component (12) comprises a bridge (31) having at its ends claws (32) with a shape complementary to the shape of said recessed segment (30) of the edge (29), such that said claws (32) removably snap-fit with said recessed segment (30) of the edge (29), and said bridge (31) closes a segment of the open upper face (16) of said channel (13).

22. The cable-holder component (12) according to claim 21, **characterized in that** said bridge (31) is formed such that, when it is snap-fitted to said recessed segment (30) of the edge (29) through said claws (32), closing a segment of the open upper face (16) of said channel (13), said bridge (31) does not protrude from said open upper face (16) of the channel (13).
